# EUROPÄISCHE PATENTANMELDUNG

(11) **EP 0 884 356 A2**
(43) Veröffentlichungstag der Anmeldung: **16.12.1998**
(21) Anmeldenummer: 98110518.2
(22) Anmeldetag: 09.06.1998
(51) Int. Cl.: C08L 23/10

(54) **Blends aus Olefinpolymeren und syndiotaktischen Vinylpolymeren**

(30) Priorität: 12.06.1997 DE 19724743
(71) Anmelder: PCD Polymere AG, 2323 Schwechat-Mannswörth (AT)
(72) Erfinder: Rätzsch, Manfred, Prof. Dr., 4202 Kirchschlag (AT); Arnold, Manfred, Prof. Dr., 06667 Leissling (DE); Knorr, Jana, Dipl.-Chem., 06766 Wolfen (DE)
(74) Vertreter: Schinke, Herbert, Dr. Dr., Patentanwaltskanzlei

(57) **Zusammenfassung**

Blends aus Olefinpolymeren und syndiotaktischen Vinylpolymeren werden durch katalytische Polymerisation von Olefinen und Vinylaromaten bzw. Methacrylsäureestern als Vinylverbindungen in inerten Verdünnungsmitteln in Gegenwert eines Katalysatorgemischs aus Übergangsmetallverbindungen, Metalloxanverbindungen und Metallalkylverbindungen hergestellt.

Die Blends besitzen eine feindisperse Verteilung der Blendkomponenten und sind zur Herstellung von Folien, Fasern, Platten, Beschichtungen, Rohren, Hohlkörpern, Spritzgußerzeugnissen und Schaumstoffen geeignet.

## Beschreibung

Die Erfindung betrifft Blends aus Olefinpolymeren und syndiotaktischen Polyvinylaromaten und/oder syndiotaktischen Polymethacrylsäureestern, die eine feindisperse Verteilung der Blendkomponenten, hohe Wärmeformbeständigkeit und eine verbesserte Bedruckbarkeit und Lackierbarkeit besitzen, sowie eines Verfahrens zu deren Herstellung.

Blends aus Olefinpolymeren und üblichen ataktischen Polyvinylaromaten und/oder üblichen isotaktischen Polymethacrylsäureestern sind bekannt. Aus der thermodynamischen Unverträglichkeit der Blendkomponenten resultieren eine grobdisperse Struktur und die sich daraus ergebenden unbefriedigenden Werkstoffeigenschaffen der Blends (Benderly, D., J. Mater.Sci. Lett. 1996, 15(15), 1349-1352). Zur Erzielung einer feindispersen Struktur der Blendkomponenten werden Kompatibilisatoren zugesetzt, die eine Teilverträglichkeit der Komponenten an der Phasengrenzfläche vermitteln.

Für Blends aus Polyethylen und ataktischem Polystyren wird durch Zumischung von Styren-Ethylen/Propylen - Diblockcopolymeren (Domininghaus, H., Gummi-Fasern - Kunststoffe 45(1992)7, 352-357) oder von Styren-Ethylen/Butadien-Styren - Triblockcopolymeren (Yang, L., J. Appl. Polymer Sci. 58(1995), 117-127) eine Kompatibilisierung der nicht verträglichen Komponenten erzielt.

Ebenfalls die reaktive Extrusion von Polyethylen mit Polystyren in Gegenwart von Peroxiden und Vernetzungscoagentien (EP 0 210 306; Rudin, A., Polymer Engng. Sci. 32(1992)22, 1678-1686) sowie von Styren-Vinylbenzaldehyd-Copolymeren als Cokomponenten (Rudin, A., Polymer Engng. Sci. 28(1988)21, 1434-1442) führt zu einer Verbesserung der Kompatibilität der Komponenten, da durch partielle Verknüpfung der Komponenten der Kompatibilisator in situ gebildet wird.

Bekannt sind ebenfalls Blends aus Ethylen-Cycloolefin-Copolymeren wie Ethylen-Norbornen-Copolymeren mit ataktischem Polystyren (DD 223 721).

Inhomogene Blends entstehen weiterhin bei der thermoplastischen Verarbeitung von Mischungen aus isotaktischem Polypropylen und ataktischem Polystyren (Fortelny, I., J. Applied Polymer Sci. 59(1996), 155-164).

Bekannte Verfahren zur Kompatibilisierung von Blends aus isotaktischem Polypropylen und ataktischem Polystyren sind der Zusatz von Styren-gepfropftem Polypropylen (EP 0 435 340), Styren - gepfropftem elastomeren Polypropylen (EP 0 640 650), elastomerem Polybuten (PCT-WO 94 28 066), hydrierten Isopren-Styren-Blockcopolymeren (JP 06 049 261), Styren-Ethylen/Butadien-Styren - Blockcopolymeren (JP 04 045 140) und von Styren-Butadien - Blockcopolymeren (JP 06 271 717; Navratilova, E., Polym. Networks Blends 6(1996)3, 127-133).

Wirksame bekannte Kompatibilisatoren in Blends aus isotaktischem Polypropylen und ataktischem Polystyren sind weiterhin segmentierte Copolymere, die durch Umsetzung von Styren-Maleinsäureanhydrid-Copolymeren mit Amino-funktionalisiertem Polypropylen (PCT-WO 93 02 140) bzw. Anhydrid-funktionalisiertem Polypropylen (JP 04 053 853), durch Umsetzung von Maleinsäureanhydrid-modifizierten hydrierten Butadien-Styren-Blockcopolymeren mit Epoxygruppen-funktionalisiertem Polypropylen (JP 04 266 953), durch Umsetzung von Glycidylgruppen-modifiziertem Polystyren und Säureanhydridgruppen-modifiziertem Polypropylen (JP 05 179 094) oder durch Umsetzung von Styren-Maleinsäureanhydrid-Copolymeren mit Säureanhydrid modifiziertem Polypropylen und bifunktionellen Verbindungen entgegengesetzter Reaktivität (JP 05 209 096) gebildet werden.

Eine reaktive Kompatibilisierung von isotaktischem Polypropylen mit ataktischem Polystyren erfolgt durch Umsetzung mit Peroxiden in der Schmelze (JP 59 226 042), gegebenenfalls in Gegenwart von Styren - gepfropftem Polypropylen (JP 04 041 614) oder in Gegenwart von aromatischen Vinylmonomeren (JP 05 140 245).

Eine erhöhte Kompatibilität von Polypropylen-Polystyren-Blends wird ebenfalls dadurch erzielt, daß die ataktische Polystyrenkomponente in situ bei der radikalischen Styrenpolymerisation in Gegenwart des dispergierten Polypropylens gebildet wird (EP 0 435 340).

Bekannt ist ebenfalls, kompatible Blends aus Polypropylen und Polystyren in situ durch eine spezielle Polymerisationstechnologie unter Einsatz von Ziegler-Natta-Katalysatoren ( 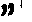 Reaktorblends") herzustellen, die gebildete Polystyrenkomponente liegt aber ebenfalls hier als ataktisches Polymer vor [ Modern Plastics Intern. (1996)3, 27; (1996)4, 93].

Bei Blends aus Polypropylen und Polymethylmethacrylat wird der Zusatz von Reaktionsprodukten aus Amino-funktionalisiertem Polypropylen und Styren-Maleinsäureanhydrid-Copolymeren als Kompatibilisatoren beschrieben, um eine Teilverträglichkeit der Komponenten zu erzielen (WO 93 02140).

Für Blends aus Poly-4-methylpenten, Polybuten-1 oder Polypropylen mit Polymethylmethacrylat stellen die entsprechenden Azlacton-gepfropften Polyolefine geeignete Kompatibilisatoren für die thermodynamisch unverträglichen Blendkomponenten dar (US 5 262 484).

Bekannt ist weiterhin der Einsatz von Polypropylen-Polymethylmethacrylat-Blockcopolymeren zur Verbesserung der Werkstoffeigenschaften von Polypropylen-Polymethylmethacrylat-Blends (Hosoda, S., Polymer J. 1991(23), 277). Die Herstellung dieser Blockcopolymeren kann durch komplexkoordinative Polymerisation von Propylen in Gegenwart von Ethylen-bis-(tetrahydroindenyl)zirkoniumdichlorid/Aluminoxan-Katalysatoren, Umsetzung der Ethylenendgruppen mit Magnesiumbromid und Einsatz des modifizierten Polypropylens als makromolekularer Initiator für die anionische Polymerisation von Methylmethacrylat erfolgen (Shiono, T., Macromolecules 1994 (27), 6229-6231). Von Nachteil bei diesen Kompatibilisatoren ist der hohe Aufwand für deren Herstellung sowie die begrenzte Wirksamkeit bei der Erzielung einer feindispersen Struktur.

Blends aus Olefinpolymeren und üblichen ataktischen Polyvinylaromaten und üblichen isotaktischen Polymethacrylsäureestern haben weiterhin den Nachteil, daß die Wärmeformbeständigkeit dieser Blends durch die niedrigen Erweichungstemperaturen der ataktischen Polyvinylaromaten bzw. isotaktischen Polymethacrylsäureester begrenzt ist. So beträgt die Erweichungstemperatur der üblichen ataktischen Polyvinylaromaten Polystyren 90-100°C, Poly-4-chlorstyren 120-128°C, Poly-4-methoxystyren 80-90°C und Poly-α-methylstyren 180-185°C und die Erweichungstemperatur der üblichen isotaktischen Polymethacrylsäureester Polymethylmethacrylat 160°C und Poly-tert.butylmethacrylat 104°C (Brandrup-Immergut, Polymer Handbook, Interscience Publishers New York 1989).

Einen weiteren Abfall der Wärmeformbeständigkeit bewirken weiterhin die eingesetzten elastomeren Kompatibilisatorenkomponenten in den Blends aus Olefinpolymeren und üblichen Vinylpolymeren.

Gegenüber üblichen ataktischen Polyvinylaromaten oder üblichen isotaktischen Polymethacrylsäureestern besitzen hochgeordnete syndiotaktische Polyvinylaromaten bzw. Polymethacrylsäureester eine bedeutend höhere Kristallitschmelztemperatur. So liegt die Schmelztemperatur von isotaktischem Polystyren bei 210-225°C, von syndiotaktischem Polystyren bei 255 -270°C, von syndiotaktischem Polymethylmethacrylat bei 200°C und von syndiotaktischem Poly-tert.butylmethacrylat bei 165°C.

Herstellungsverfahren von syndiotaktischen Polyvinylaromaten und von syndiotaktischen Polymethacrylsäureestern sind bekannt.

Bekannte Herstellungsverfahren für syndiotaktisches Polystyren sind die radikalische Polymerisation von Styren bei Temperaturen unterhalb von -65°C [Doi, Y., Macromolecules 19(1986), 289] sowie die komplexkoordinative Polymerisation in Gegenwart von Aluminiumalkylen/Titanhalogeniden bei Temperaturen unterhalb von -65°C [Natta, G., J. Amer. Chem. Soc. 84(1962), 1488].

Katalysatorensysteme aus Aluminiumalkyl/Cylopentadienyltitanalkoholaten mit Alkylaluminoxanen als Cokatalysatoren bewirken bei der komplexkoordinativen Polymerisation von Styren bereits bei Raumtemperatur und ebenfalls bei erhöhter Temperatur die Bildung von syndiotaktischem Polystyren[ EP 0 210 616 ]. Eine Verbreiterung der Molmassenverteilung des syndiotaktischen Polystyrens läßt sich durch Einsatz von Gemischen aus Cyclopentadienyltitanaten erreichen [EP 0 420 134]. Hohe Ausbeuten werden bei Einsatz eines Katalysatorsystems aus Hydro-tris-pyrazolylborat-yclopentadienyl-titan-dimethoxid als Titankomponente bei einem Al/Ti - Verhältnis von 400 erzielt [EP 0 617 052].

Geeignete Katalysatorensysteme für die Polymerisation von Methacrylsäureestern unter Bildung syndiotaktischer Produkte sind Vanadyltrichlorid/Methylaluminoxan bzw. Vanadindiacetylacetonat/Methylaluminoxan (Endo, K., Macromol. Rapid Commun. 15, 893-896; Macromol. Chem.Phys. 196(1995), 2065-2072) und Dicyclopentadienylzirkondichlorid/Methylaluminoxan (Deng, H., Macromol.Chem.Phys. 196 (1995), 1971-1980).

Probleme bei der Schmelzehomogenisierung von Polyolefinen mit syndiotaktischen Polyvinylaromaten bzw. syndiotaktischen Polymethacrylsäureester ergeben sich aus den stark abweichenden Schmelzpunkten der Polyolefine ( Polyethylen 112-125°C, isotaktisches Polybuten 124-130°C, isotaktisches Polypropylen 159-161°C) und der syndiotaktischen Vinylaromaten (>250°C) bzw. syndiotaktischen Polymethacrylsäureester (> 165°C).

Eine Herstellung von Blends aus Olefinpolymeren und syndiotaktischen Vinylpolymeren und/oder syndiotaktischen Polymethacrylsäureestern in situ unter Einsatz bekannter Katalysatorsysteme für die katalytische Polymerisation der entsprechenden Monomeren und bekannten Reaktionsbedingungen führt zu keinem Ergebnis.

Die Aufgabe der vorliegenden Erfindung bestand in der Entwicklung von Blends aus Olefinpolymeren und syndiotaktischen Polyvinylaromaten und/oder syndiotaktischen Polymethacrylsäureestern, die eine feindisperse Verteilung der Blendkomponenten, hohe Wärmeformbeständigkeit und eine verbesserte Bedruckbarkeit und Lackierbarkeit besitzen, sowie eines Verfahrens zu deren Herstellung.

Die Aufgabe wurde durch Blends aus Olefinpolymeren und syndiotaktischen Vinylpolymeren mit feindisperser Verteilung der Blendkomponenten, hoher Wärmeformbeständigkeit und verbesserter Bedruckbarkeit und Lackierbarkeit gelöst,
wobei die Blends erfindungsgemäß aus 1 bis 99 Masse% Poly-C₂-C₂₀-Olefinen bzw. C₂-C₂₀-Olefin-Copolymeren, 99 bis 1 Masse% syndiotaktischen Poly-C₈-C₁₄-vinylaromaten und/oder syndiotaktischen Poly-C₄-C₁₅-methacrylsäureestern bzw. C₄-C₁₅-Methacrylsäureester-Copolymeren als syndiotaktische Vinylpolymere und gegebenenfalls 0,01 bis 40 Masse%, bezogen auf die Summe der Polymeren, an Zusatzstoffen bestehen,
und wobei die Herstellung der Blends durch
a) katalytische Polymerisation von C₂-C₂₀-Olefinen, gegebenenfalls im Gemisch mit 99 bis 1 Masse% C₈-C₁₄-Vinylaromaten, bei -30°C bis + 100°C unter Inertbedingungen im Druckbereich von 0,5 bar bis 10 bar in Gegenwart von 10 bis 2000 Masse%, bezogen auf die Summe der eingesetzten C₂-C₂₀-Olefine und C₈-C₁₄-Vinylaromaten, an inerten Verdünnungsmitteln und von 0,1 Masse% bis 10 Masse%, bezogen auf die Summe der eingesetzten C₂-C₂₀-Olefine, eines Katalysatorgemischs, das aus 10⁻⁴ Masse% bis 10⁻² Masse% verbrückten Metallocenkomplexen A, 0,1 bis 10 Masse% Metalloxanverbindungen B, 0,001 Masse% bis 1,0 Masse% Metallalkylverbindungen C und, bei Anwesenheit von C₈-C₁₄-Vinylaromaten in der Reaktionsmischung, 10⁻⁴ Masse% bis 10⁻² Masse% Übergangsmetallverbindungen D, jeweils bezogen auf die Summe der eingesetzten C₂-C₂₀-Olefine und C₈-C₁₄-Vinylaromaten, besteht,
b) gegebenenfalls nachfolgend Zusatz von 1 bis 900%, bezogen auf die in a) eingesetzten C₂-C₂₀-Oleflne und C₈-C₁₄-Vinylaromaten, an C₄-C₁₅-Methacrylsäureestern, 0,001 Masse% bis 1,0 Masse%, bezogen auf die Summe der eingesetzten C₂-C₂₀-Olefine und C₄-C₁₅-Methacrylsäureester, an Metallalkylverbindungen E und gegebenenfalls 10⁻⁴ Masse% bis 5 x 10⁻³ Masse% an verbrückten Metallkomplexen A, 0,1 Masse% bis 6 Masse% an Metalloxanverbindungen B und 0,001 Masse% bis 0,05 Masse% an Metallalkylverbindungen C, jeweils bezogen auf die Summe der eingesetzten C₂-C₂₀-Olefine, C₈-C₁₄-Vinylaromaten und C₄-C₁₅-Methacrylsäureester,
   wobei die Metallalkylverbindungen E Metallalkyle des Magnesiums oder Zinks oder Mischungen dieser Metallalkyle darstellen und die Verbindungen A, B und C mit den unter a) benannten Verbindungen identisch sind,
c) nachfolgend gegebenenfalls Druckerhöhung bis 50 bar,
d) nachfolgend katalytische Polymerisation der in den Reaktionsmischungen a) und b) enthaltenen C₈-C₁₄-Vinylaromaten, C₄-C₁₅-Methacrylsäureester und nichtumgesetzten C₂-C₂₀-Olefine in Gegenwart der in den Reaktionsmischungen a) und b) enthaltenen Katalysatoren bei -30°C bis + 100°C,
e) nachfolgend Desaktivierung der Katalysatoren durch Säuren und Abtrennung der Poly-C₂-C₂₀-Olefine bzw. C₂-C₂₀-Olefin-Copolymeren und syndiotaktischen Vinylpolymeren in an sich bekannter Weise,
f) und nachfolgend eine Plastifizierung des Gemischs aus Poly-C₂-C₂₀-Olefinen bzw. C₂-C₂₀-Olefin-Copolymeren und syndiotaktischen Vinylpolymeren an sich bekannter Weise in Extrudern oder Thermoplastknetern bei Temperaturen oberhalb der Schmelztemperatur der Poly-C₂-C₂₀-Olefine bzw. C₂-C₂₀-Olefin-Copolymeren
   erfolgt ist,
   wobei bei Abwesenheit von C₈-C₁₄-Vinylaromaten in der Reaktionsmischung a) die Reaktionsstufe b) zwingend ist und bei Anwesenheit von C₈-C₁₄-Vinylaromaten in der Reaktionsmischung a) die Reaktionsstufe b) entfallen kann,
   und wobei vor und/oder im Verfahrensschritt f) als Zusatzstoffe 0,01 bis 2,5 Masse% Stabilisatoren, 0,1 bis 1 Masse% Antistatika, 0,2 bis 3 Masse% Pigmente , 0,05 bis 1 Masse% Nukleierungsmittel, 5 bis 40 Masse% Füll- und/oder Verstärkerstoffe, 2 bis 20 Masse% Flammschutzmittel, 1 bis 30 Masse% Elastomere als Schlagzähmodifikatoren und/oder 0,01 bis 1 Masse% Verarbeitungshilfsmittel, jeweils bezogen auf die Summe der Poly-C₂-C₂₀-Olefine bzw. C₂-C₂₀-Olefin-Copolymeren und syndiotaktischen Vinylpolymeren, zugesetzt werden können.

Die Poly-C₂-C₂₀-Olefine bzw. C₂-C₂₀-Olefin-Copolymere sind erfindungsgemäß Olefinpolymere, die durch komplexkoordinative Polymerisation von Olefinen und/oder Cycloolefinen wie C₂-C₂₀ - α-Olefinen, insbesondere von Ethylen, Propylen, Buten-1, Hexen-1, Octen-1, Decen-1, Hepten-1, Penten-1 und/oder Nonen-1 und/oder C₅-C₂₀ verzweigten Olefinen, insbesondere 4-Phenylbuten-1, 6-Phenylhexen-1, 3-Methylbuten-1, 4-Methylpenten-1, 3-Methyl-penten-1, 3-Methylhexen-1, 4-Methylhexen-1, 5-Methylhexen-1, 3,3-Dimethylpenten-1, Methylethylpenten-1, Ethylpenten-1, Ethylhexen-1, Dimethylbuten-1, 3,4-Diethylbuten-1, Ethylocten-1, Dimethylpenten-1, 4,4-Dimethylpenten-1, Cyclopenten, Methylcyclohexen, Vinylcyclohexan, Vinylcyclohexen, Norbornen, 5-Methylnorbornen, 5-Isobutylnorbornen, 5-Ethylnorbornen, 5,6-Dimethylnorbornen und/oder 1-Methylnorbornen, oder Mischungen dieser Olefine hergestellt werden können.

Bevorzugt werden als Poly-C₂-C₂₀-Olefine bzw. C₂-C₂₀-Olefin-Copolymere Olefinpolymere mit hohem Ordnungszustand. Geeignet sind ebenfalls amorphe Olefinpolymere sowie Mischungen aus Olefinpolymeren mit hohem Ordnungszustand und amorphen Olefinpolymeren in beliebigen Mischungsverhältnissen.

Beispiele für syndiotaktische Polyvinylaromaten zur Herstellung der erfindungsgemäßen Blends sind Polyvinylaromaten, die durch komplexkoordinative Polymerisation von Vinylaromaten wie α-Ethylstyren, α-Methylstyren, Bromstyren, Butenyl-α-methylstyren, Butenylstyren, Chlorethylstyren, Chlorstyren, Dimethylstyren, Dimethyl-tert.butylsilylstyren, Divinylbenzen, Divinyltoluen, Ethylbutenylstyren, Fluorstyren, Isopropenylstyren, Methylbutenylstyren, Methylfluorstyren, Methylstyren, Pentenylstyren, Propenylstyren, Styren, tert.Butylstyren, Triethylsilylstyren, Trimethylsilylstyren, Triphenylsilylstyren, Vinylbiphenyl, Vinylbrombiphenyl, Vinylbutenylbiphenyl, Vinylchlorbiphenyl, Vinylfluorbiphenyl, Vinylmethylbiphenyl, Vinylphenylanthracen, Vinylphenylnaphthalin, Vinylphenylphenanthren, Vinylphenylpyren, Vinylphenylterphenyl, Vinylterphenyl und/oder Vinyltrimethylsilylbiphenyl oder aus Mischungen dieser vinylaromatischen Monomeren unter Ausbildung einer überwiegend syndiotaktischen Kettenstruktur hergestellt werden können.

Die Poly-C₄-C₁₅-methacrylsäureester bzw. C₄-C₁₅-Methacrylsäureester-Copolymere in den erfindungsgemäßen Blends aus Poly-C₂-C₂₀-olefinen bzw. C₂-C₂₀-Olefin-Copolymeren und syndiotaktischen Vinylpolymeren sind syndiotaktische Poly-C₄-C₁₅-methacrylsäureester und/oder C₄-C₁₅-Methacrylsäureester-Copolymere, die durch katalytische Polymerisation von C₄-C₁₅-Methacrylsäureestern oder Gemischen von C₄-C₁₅-Methacrylsäureestern, bevorzugt von Methylmethacrylat, tert.Butylmethacrylat, Glycidylmethacrylat, Allylmethacrylat, Methallylmethacrylat, C₂-C₈-Alkylmethacrylaten wie Ethylmethacrylat oder Ethylhexylmethacrylat, C₂-C₈-Hydroxyalkylmethacrylaten wie 2-Hydroxyethylmethacrylat oder Hydroxyoctylmethacrylat, C₃-C₈-Cycloalkyl-methacrylaten wie Cyclohexylmethacrylat oder Ethylcyclohexylmethacrylat und/oder C₆-C₁₂-Aryl-methacrylaten wie Benzylmethacrylat oder tert.Butylphenylmethacrylat unter Ausbildung einer überwiegend syndiotaktischen Kettenstruktur hergestellt werden können.

Die verbrückten Metallocenkomplexe A des Katalysatorgemischs, die erfindungsgemäß zur Herstellung der Blends aus Olefinpolymeren und syndiotaktischen Vinylpolymeren eingesetzt worden sind, sind Metallocenkomplexe der Formel 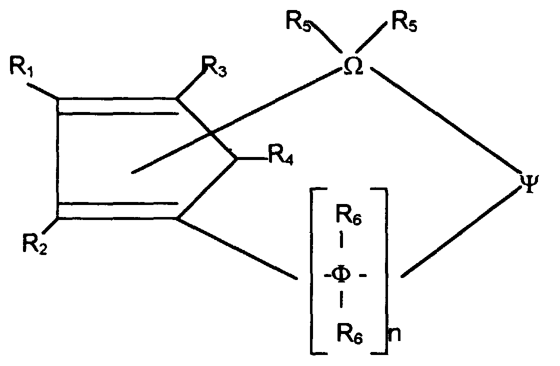 sowie Mischungen dieser verbrückten Metallocenkomplexe,
dabei bedeuten:
R₁, R₂, R₃, R₄ : H; C₁₋₁₂ - Alkyl, C₆₋₁₇ - Aryl; C₆₋₁₉ - Arylalkyl; C₅₋₇ - Cycloalkyl; C₁₋₈ - alkylsubstituiertes C₅₋₇ - Cycloalkyl, (C₁₋₁₂ - Alkyl)-Si-(C₁₋₁₂ - Alkyl)₂, (C₆₋₁₇ - Aryl)- Si - (C₆₋₁₇ - Aryl)₂, (C₆₋₁₉ - Arylalkyl) - Si - (C₆₋₁₉ - Arylalkyl)₂, (C₅₋₇ Cycloalkyl) - Si - (C₅₋₇ - Cycloalkyl)₂ und/oder (alkylsubstituiertes C₅₋₇ - Cycloalkyl) - Si -(alkylsubstituiertes C₅₋₇ - Cycloalkyl)₂,
R₅ : H, Halogen, C₁₋₁₂ - Alkyl, C₆₋₁₇ - Aryl; C₆₋₁₉ - Arylalkyl; C₅₋₇ - Cycloalkyl und/oder C₁₋₈ - alkylsubstituiertes C₅₋₇ - Cycloalkyl,
R₆ : H, C₁₋₁₂ - Alkyl, C₆₋₁₇ - Aryl; C₆₋₁₉ - Arylalkyl; C₅₋₇ - Cycloalkyl und/oder C₁₋₈ - alkylsubstituiertes C₅₋₇ - Cycloalkyl,
Ω : Ti, Zr, Hf, V, Nb und/oder Ta,
Φ : C und/oder Si, n steht für ganzzahlige Werte von 1 bis 6,
   Ge und/oder Sn n=1
Ψ : -O-, -S- , -N (C₁₋₁₂ -Alkyl)-, -N (C₆₋₁₇ - Aryl)- , -N (C₆₋₁₉ - Arylalkyl)-, N- (C₅₋ ₇ - Cycloalkyl)-, - N (alkylsubstituiertes C₅₋₇ - Cycloalkyl)- , - P (C₁₋₁₂ - Alkyl) -, - P (C₆₋₁₇ - Aryl)- , - P (C₆₋₁₉ - Arylalkyl)-, - P(C₅₋₇ - Cycloalkyl)-, - P (alkylsubstituiertes C₅₋₇ - Cycloalkyl)- , (C₁₋₁₂ - Alkyl)-Si-(C₁₋₁₂ - Alkyl)₂, (C₆₋₁₇ - Aryl)- Si -(C₆₋₁₇ - Aryl)₂, (C₆₋₁₉ - Arylalkyl) - Si - (C₆₋₁₉ - Arylalkyl)₂, (C₅₋₇ - Cycloalkyl) - Si - (C₅₋₇ - Cycloalkyl)_{2,} (alkylsubstituiertes C₅₋₇ - Cycloalkyl) - Si -(alkylsubstituiertes C₅₋₇ - Cycloalkyl)₂ und/oder

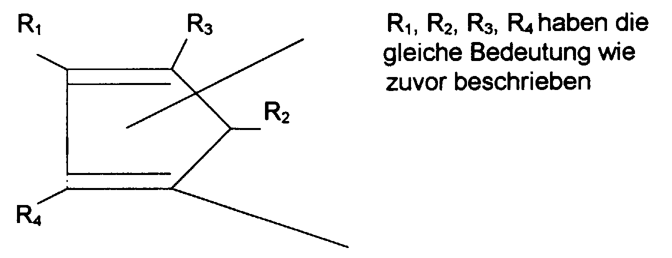

Die Metalloxanverbindungen B des Katalysatorgemischs, die erfindungsgemäß zur Herstellung der Blends aus Olefinpolymeren und syndiotaktischen Vinylpolymeren eingesetzt worden sind, sind oligomere und/oder polymere cyclische und/oder lineare Metalloxanverbindungen von Metallen der Hauptgruppen III und/oder IV mit der allgemeinen Formel (1) oder (2) 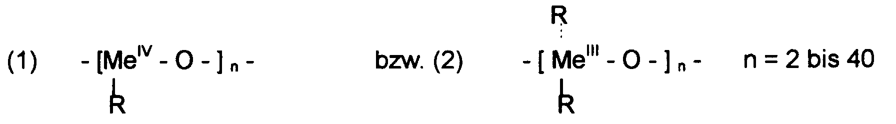 sowie monomere oder oligomere lineare Metalloxanverbindungen der allgemeinen Formel (3) oder (4) 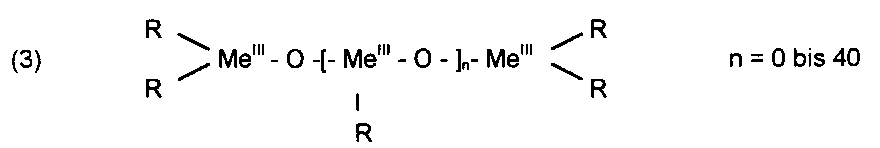 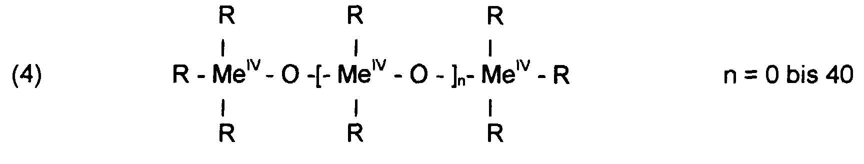 wobei jeweils Me^{IV} = Ge, Sn, Pb; Me^{III} = B, Al, Ga, In; R = C₁-C₁₈ - Alkyl,
sowie Mischungen dieser Metalloxane.

Die Metallalkylverbindungen C des Katalysatorgemischs, die erfindungsgemäß zur Herstellung der Blends aus Olefinpolymeren und syndiotaktischen Vinylpolymeren eingesetzt worden sind, sind Metallalkyle von Bor und/oder Aluminium oder Mischungen dieser Metallalkylverbindungen.

Die Übergangsmetallverbindungen D des Katalysatorgemischs, die effindungsgemäß bei Anwesenheit von C₈-C₁₄-Vinylaromaten in der Reaktionsmischung zur Herstellung der Blends aus Olefinpolymeren und syndiotaktischen Vinylpolymeren eingesetzt worden sind, sind Halogenide, Alkoxide, Alkoxyhalogenide, Acetylacetonate, Cyclopentadienylverbindungen, Indenylverbindungen und/oder zusätzlich N, P oder B enthaltende metallorganische Verbindungen von Übergangsmetallen der Gruppe IV A und V A des Periodensystems sowie Mischungen dieser Übergangsmetallverbindungen.

Die Metallalkylverbindungen E , die erfindungsgemäß zur Herstellung der Blends aus Olefinpolymeren und syndiotaktischen Vinylpolymeren bei Anwesenheit von C₄-C₁₅-Methacrylsäureestern in der Reaktionsmischung eingesetzt worden sind, sind Metallalkyle des Magnesiums oder Zinks.

Als Stabilisatoren sind bei der Herstellung der erfindungsgemäßen Blends aus Olefinpolymeren und syndiotaktischen Vinylpolymeren bevorzugt Mischungen aus 0,01 bis 0,6 Masse% phenolischen Antioxidantien, 0,01 bis 0,6 Masse% 3-Arylbenzofuranone, 0,01 bis 0,6 Masse% Verarbeitungsstabilisatoren auf Basis von Phosphiten, 0,01 bis 0,6 Masse% Hochtemperaturstabilisatoren auf Basis von Disulfiden und Thioäthern und/oder 0,01 bis 0,8 Masse% sterisch gehinderten Aminen (HALS) eingesetzt worden.

Geeignete phenolische Antioxidantien sind 2-tert.Butyl-4,6-dimethylphenol, 2,6-Di-tert.butyl-4-methylphenol, 2,6-Di-tert.butyl-4-isoamylphenol, 2,6,-Di-tert.butyl-4-ethylphenol, 2-tert.Butyl-4,6-diisopropylphenol, 2,6-Dicyclopentyl-4-methylphenol, 2,6-Di-tert.-butyl-4-methoxymethylphenol, 2-tert.Butyl-4,6-dioctadecylphenol, 2,5-Di-tert.butylhydrochinon, 2,6-Di-tert.butyl-4,4-hexadecyloxyphenol, 2,2'-Methylen-bis(6-tert.butyl-4-methylphenol), 4,4'-Thio-bis-(6-tert.butyl-2-methylphenol), 3(3,5-Di-tert.butyl - 4 - hydroxyphenyl)propionsäureoctadecylester, 1,3,5 - Trimethyl - 2,4,6-tris(3',5'di-tert.butyl-4-hydroxybenzyl)benzen und/oder Pentaerythritol-tetrakis[3-(3,5-di-tert.butyl-4-hydroxyphenyl)]propionat.

Als Benzofuranonderivat ist insbesondere 5,7-Di-tert.butyl-3-(3,4-di-methylphenyl)-3H-benzofuran-2-on geeignet.

Als HALS-Verbindungen sind Bis-2,2,6,6 tetramethyl-4-piperidylsebazat und/oder Poly - ([1,1,3,3,-tetramethylbutyl)-imino] - 1,3,5- triazin - 2,4,diyl)[2,2,6,6-tetramethylpiperidyl)-amino]-hexamethylen-4-(2,2,6,6-tetra-methyl)piperidyl)-imino] besonders geeignet.

Bevorzugt geeignete Elastomere als Schlagzähmodifikatoren für die erfindungsgemäßen Blends aus Olefinpolymeren und syndiotaktischen Vinylpolymeren sind Ethylen-Propylen-Kautschuk, Ethylen-Propylen-Dien-Terpolymere, Styren-Butadien-Styren-Blockcopolymere, Styren-Ethylen-Butadien-Styren-Blockcopolymere, Acrylatkautschuk, Silikonkautschuk und/oder Fluorolefinelastomere.

Als Verarbeitungshilfsmittel können Calciumstearat, Magnesiumstearat und/oder Wachse eingesetzt werden.

Eine bevorzugte Zusammensetzung der Blends enthält die syndiotaktische Vinylpolymer-Komponente in Form von feindispersen, nicht aufgeschmolzenen Partikeln, insbesondere mit mittleren Partikeldurchmessern von 5 bis 250 µm.

Die Blends aus Olefinpolymeren und syndiotaktischen Vinylpolymeren mit feindisperser Verteilung der Blendkomponenten, hoher Wärmeformbeständigkeit und verbesserter Bedruckbarkeit und Lackierbarkeit werden erfindungsgemäß nach einem Verfahren durch
a) katalytische Polymerisation von C₂-C₂₀-Olefinen, gegebenenfalls im Gemisch mit 99 bis 1 Masse% C₈-C₁₄-Vinylaromaten, bei -30°C bis + 100°C unter Inertbedingungen im Druckbereich von 0,5 bar bis 10 bar in Gegenwart von 10 bis 2000 Masse%, bezogen auf die Summe der eingesetzten C₂-C₂₀-Olefine und C₈-C₁₄-Vinylaromaten, an inerten Verdünnungsmitteln und von 0,1 Masse% bis 10 Masse%, bezogen auf die Summe der eingesetzten C₂-C₂₀-Olefine, eines Katalysatorgemischs, das aus 10⁻⁴ Masse% bis 10⁻² Masse% verbrückten Metallocenkomplexen A, 0,1 bis 10 Masse% Metalloxanverbindungen B, 0,001 Masse% bis 1,0 Masse% Metallalkylverbindungen C und bei Anwesenheit von C₈-C₁₄-Vinylaromaten in der Reaktionsmischung 10⁻⁴ Masse% bis 10⁻² Masse% Übergangsmetallverbindungen D, jeweils bezogen auf die Summe der eingesetzten C₂-C₂₀-Olefine und C₈-C₁₄-Vinylaromaten, besteht,
   wobei die verbrückten Metallocenkomplexe A Metallocenkomplexe der Formel 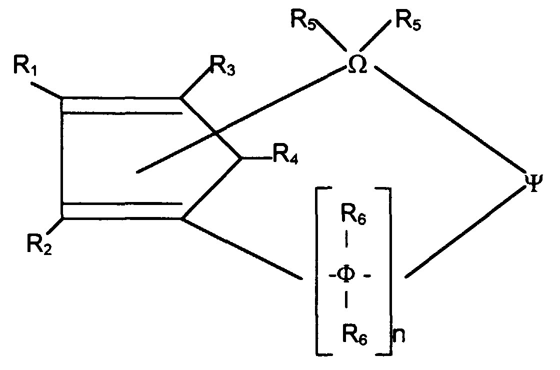 sowie Mischungen dieser verbrückten Metallocenkomplexe darstellen,
   dabei bedeuten :
   R₁, R₂, R₃, R₄ : H; (Si-substituiertes) Alkyl, (Si-substituiertes) Aryl,
   R₅, R₆ : H, Halogen, Alkyl, Aryl; Ω : Ti, Zr, Hf, V, Nb und/oder Ta,
   Φ : C und/oder Si, n steht für ganzzahlige Werte von 1 bis 6,
      Ge und/oder Sn n=1
   Ψ : - O -, - S - , Alkyl- bzw. Aryl-substituiertes N, P oder Si oder (substituiertes) Cyclopentadienyl,
   die Metalloxanverbindungen B oligomere und/oder polymere cyclische und/oder lineare Metalloxanverbindungen von Metallen der Hauptgruppen III und/oder IV mit der allgemeinen Formel (1) oder (2) 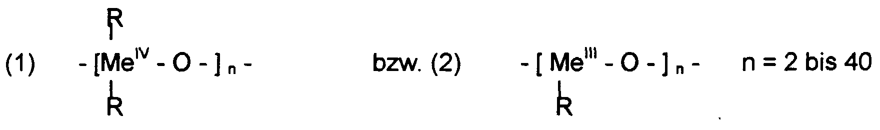 sowie monomere oder oligomere lineare Metalloxanverbindungen der allgemeinen Formel (3) oder (4) 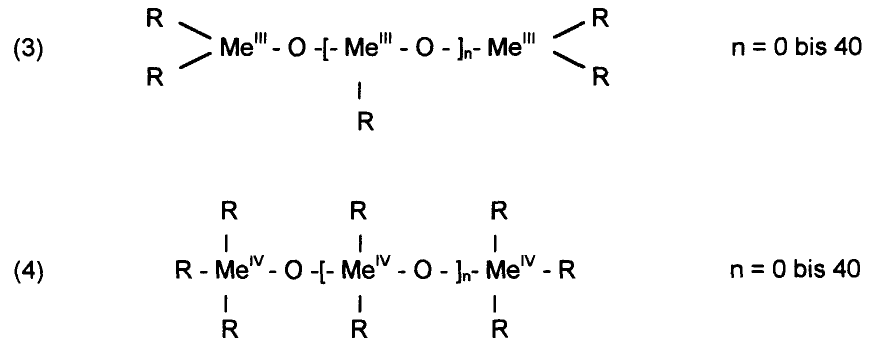 wobei jeweils Me^{IV} = Ge, Sn, Pb; Me^{III} = B, Al, Ga, In; R = C₁-C₁₈ - Alkyl,
   sowie Mischungen dieser Metalloxane, darstellen,
   die Metallalkylverbindungen C Metallalkyle von Bor und/oder Aluminium oder Mischungen dieser Metallalkylverbindungen darstellen;
   und die bei Anwesenheit von C₈-C₁₄-Vinylaromaten in der Reaktionsmischung im Katalysatorgemisch enthaltenen Übergangsmetallverbindungen D Halogenide, Alkoxide, Alkoxyhalogenide, Acetylacetonate, Cyclopentadienylverbindungen, Indenylverbindungen und/oder zusätzlich N, P oder B enthaltende metallorganische Verbindungen von Übergangsmetallen der Gruppe IV A und V A des Periodensystems sowie Mischungen dieser Übergangsmetallverbindungen darstellen,
b) gegebenenfalls nachfolgend Zusatz von 1 bis 900%, bezogen auf die in a) eingesetzten C₂-C₂₀-Olefine und C₈-C₁₄-Vinylaromaten, an C₄-C₁₅-Methacrylsäureestern, 0,001 Masse% bis 1,0 Masse%, bezogen auf die Summe der eingesetzten C₂-C₂₀-Olefine und C₄-C₁₅-Methacrylsäureester, an Metallalkylverbindungen E und gegebenenfalls 10⁻⁴ Masse% bis 5 x 10⁻³ Masse% an verbrückten Metallkomplexen A, 0,1 Masse% bis 6 Masse% an Metalloxanverbindungen B und 0,001 Masse% bis 0,05 Masse% an Metallalkylverbindungen C, jeweils bezogen auf die Summe der eingesetzten C₂-C₂₀-Olefine, C₈-C₁₄-Vinylaromaten und C₄-C₁₅-Methacrylsäureester,
   wobei die Metallalkylverbindungen E Metallalkyle des Magnesiums oder Zinks oder Mischungen dieser Metallalkyle darstellen und die Verbindungen A, B und C mit den unter a) benannten Verbindungen identisch sind,
c) nachfolgend gegebenenfalls Druckernöhung bis 50 bar,
d) nachfolgend katalytische Polymerisation der in den Reaktionsmischungen a) und b) enthaltenen C₈-C₁₄-Vinylaromaten, C₄-C₁₅-Methacrylsäureester und nichtumgesetzten C₂-C₂₀-Olefine in Gegenwart der in den Reaktionsmischungen a) und b) enthaltenen Katalysatoren bei -30°C bis + 100°C,
e) nachfolgend Desaktivierung der Katalysatoren durch Säuren und Abtrennung der Poly-C₂-C₂₀-Olefine bzw. C₂-C₂₀-Olefin-Copolymeren und syndiotaktischen Vinylpolymeren in an sich bekannter Weise,
f) und nachfolgend eine Plastifizierung des Gemischs aus Poly-C₂-C₂₀-Olefinen bzw. C₂-C₂₀-Olefin-Copolymeren und syndiotaktischen Vinylpolymeren an sich bekannter Weise in Extrudern oder Thermoplastknetern bei Temperaturen oberhalb der Schmelztemperatur der Poly-C₂-C₂₀-Olefinen bzw. C₂-C₂₀-Olefin-Copolymeren
   hergestellt,
   wobei bei Abwesenheit von C₈-C₁₄-Vinylaromaten in der Reaktionsmischung a) die Reaktionsstufe b) zwingend ist und bei Anwesenheit von C₈-C₁₄-Vinylaromaten in der Reaktionsmischung a) die Reaktionsstufe b) entfallen kann,
   und wobei vor und/oder im Verfahrensschritt f) als Zusatzstoffe 0,01 bis 2,5 Masse% Stabilisatoren, 0,1 bis 1 Masse% Antistatika, 0,2 bis 3 Masse% Pigmente, 0,05 bis 1 Masse% Nukleierungsmittel , 5 bis 40 Masse% Füll- und/oder Verstärkerstoffe , 2 bis 20 Masse% Flammschutzmittel, 1 bis 30 Masse% Elastomere als Schlagzähmodifikatoren und/oder 0,01 bis 1 Masse% Verarbeitungshilfsmittel, jeweils bezogen auf die Summe der Poly-C₂-C₂₀-Olefine bzw. C₂-C₂₀-Olefin-Copolymeren und syndiotaktischen Vinylpolymeren, zugesetzt werden können.

Als verbrückte Metallocenkomplexe A des Katalysators bei dem erfindungsgemäßen Verfahren zur Herstellung von Blends aus Olefinpolymeren und syndiotaktischen Vinylpolymeren sind insbesondere folgende verbrückte Metallocenkomplexe bevorzugt geeignet :
Dimethylsilandiyl-bis(methylindenyl)zirkoniumdichlorid,
Dimethylsilandiyl-bis(3-tert.butyl-5-butylcyclopentadienyl) zirkoniumdichlorid,
Dimethylsilandiyl-bis(3-tert.butyl-5-methylcyclopentadienyl) zirkoniumdichlorid,
Dimethylsilandiyl-bis(cyclopentadienyl)zirkoniumdichlorid,
Dimethylsilandiyl-bis(indenyl) zirkoniumdichlorid,
Dimethylsilandiyl-bis(methylindenyl)zirkoniumdichlorid,
Dimethylsilandiyl-bis(methylisopropylcyclopentadienyl) zirkoniumdichlorid,
Dimethylsilandiyl-bis(methylisopropylcyclopentadienyl)hafniumdichlorid,
Dimethylsilandiyl-bis(methylphenylindenyl) zirkoniumdichlorid,
Dimethylsilandiyl-bis(methylnaphthylindenyl) zirkoniumdichlorid und/oder
Dimethylsilandiyl-bis(tetrahydroindenyl)zirkoniumdichlorid.

Als Metalloxanverbindungen B des Katalysators bei dem erfindungsgemäßen Verfahren zur Herstellung von Blends aus Olefinpolymeren und syndiotaktischen Vinylpolymeren sind insbesondere cyclische und/oder lineare Metalloxane geeignet, die durch hydrolytische Kondensation von C₁-C₄ - Trialkylverbindungen des Bors, Aluminiums oder Galliums und/oder von C₁-C₄ - Tetraalkylverbindungen des Germaniums, Zinns oder Bleis hergestellt werden.

Als Metallalkylverbindungen C des Katalysators bei dem erfindungsgemäßen Verfahren zur Herstellung von Blends aus Olefinpolymeren und syndiotaktischen Vinylpolymeren sind bevorzugt Metallalkylverbindungen wie Tributylbor, Triethylaluminium, Triethylbor, Trihexylaluminium, Triisobutylaluminium, Triisopropylaluminium und/oder Trimethylaluminium geeignet.

Die Übergangsmetallverbindungen D des Katalysators bei dem erfindungsgemäßen Verfahren zur Herstellung von Blends aus Olefinpolymeren und syndiotaktischen Vinylpolymeren sind Halogenide, Alkoxide, Alkoxyhalogenide, Acetylacetonate, Cyclopentadienylverbindungen, Indenylverbindungen und/oder zusätzlich N, P oder B enthaltende metallorganische Verbindungen von Übergangsmetallen der Gruppe IV A und V A des Periodensystems sowie Mischungen dieser Übergangsmetallverbindungen.

Bevorzugt geeignete Halogenide von Übergangsmetallen der Gruppe IV A und V A des Periodensystems für den Einsatz als Übergangsmetallverbindungen D des komplexkoordinativen Katalysators bei dem erfindungsgemäßen Verfahren zur Herstellung von Blends aus Olefinpolymeren und syndiotaktischen Vinylpolymeren sind TiCl₄, TiCl₃, TiCl₂,TiBr₄, TiCH₃Cl, MgTiCl₆, CrCl₃, VCl₄, VOCl₃, VCl₃, NbCl₅ , ZrCl₄ und/oder Zr(CH₂C₆H₅)₂Cl₂.

Bevorzugt geeignete Alkoxide von Übergangsmetallen der Gruppe IV A und V A für den Einsatz als Übergangsmetallverbindungen D des komplexkoordinativen Katalysators bei dem erfindungsgemäßen Verfahren zur Herstellung von Blends aus Olefinpolymeren und syndiotaktischen Vinylpolymeren sind Ti(OCH₃)₄, Ti(OC₂H₅)₄, Ti(OC₃H₇)₄ Ti(OC₄H₉)₄, Ti(OC₁₈H₃₇)₄, Ti[OCH₂CH(CH₂CH₃)CH₂)₃CH₃]₄, Zr(OC₃H₇)₄ und/oder VO(OC₄H₉)₄.

Bevorzugte Alkoxyhalogenide von Übergangsmetallen der Gruppe IV A und V A für den Einsatz als Übergangsmetallverbindungen D des komplexkoordinativen Katalysators bei dem erfindungsgemäßen Verfahren zur Herstellung von Blends aus Olefinpolymeren und syndiotaktischen Vinylpolymeren sind Ti(OC₂H₅)Cl₃, Ti(OC₃H₇)Cl₃, Ti(OC₃H₇)₂Cl₂, Ti(OC₃H₇)₃Cl, Ti{OC[C(CH₃)₃]₃}₂Cl₂ und/oder Zr(OC₃H₇)₃Cl.

Beispiele für geeignete Acetylacetonate von Übergangsmetallen der Gruppe IV A und V A für den Einsatz als Übergangsmetallverbindungen D des komplexkoordinativen Katalysators bei dem erfindungsgemäßen Verfahren zur Herstellung von Blends aus Olefinpolymeren und syndiotaktischen Vinylpolymeren sind insbesondere Ti(CH₃COCHCOCH₃)₂Cl₂, Ti(CH₃COCHCO-CH₃)₂(OC₄H₉)₂, Ti(CH₃COCHCOCH₃)₃, Zr(CH₃COCHCOCH₃)₄ und/oder VO(CH₃COCHCOCH₃)₂.

Bevorzugte Cyclopentadienylalkylverbindungen von Übergangsmetallen der Gruppe IV A und V A für den Einsatz als Übergangsmetallverbindungen D des komplexkoordinativen Katalysators bei dem erfindungsgemäßen Verfahren zur Herstellung von Blends aus Olefinpolymeren und syndiotaktischen Vinylpolymeren sind (C₅H₅)Ti(CH₃)₃, (C₅H₅)Ti(C₂H₅)₃, (C₅H₅)Ti(C₄H₉)₃, (C₅H₅)Ti(CH₂C₆H₅)₃ und/oder (CH₂)(C₅H₅)₂Ti-(CH(C₆H₅)(CH₂CH₂).

Als Cyclopentadienylhalogenide von Übergangsmetallen der Gruppe IV A für den Einsatz als Übergangsmetallverbindungen D des komplexkoordinativen Katalysators bei dem erfindungsgemäßen Verfahren zur Herstellung von Blends aus Olefinpolymeren und syndiotaktischen Vinylpolymeren sind insbesondere (C₅H₅)TiCl₃, (C₅H₅)₂TiCl₂, (C₅H₅)Ti(OC₄H₉)₂Cl₂, (C₅H₅)Ti(OCH₃)₂Cl₂, (C₅H₅)Ti(OC₆H₅)Cl₂, (CH₂)(C₅H₅)₂TiCl₂, (CH₂CH₂)[(C₅H₅(CH₃)₄]₂TiCl_{2,} (C₅H₅)ZrCl_{3.} (C₅H₅)NbCl₂ und/oder (C₅H₅)ZrCl₂ geeignet.

Beispiele für geeignete Cyclopentadienylalkoxyverbindungen von Übergangsmetallen der Gruppe IV A und V A für den Einsatz als Übergangsmetallverbindungen D des komplexkoordinativen Katalysators bei dem erfindungsgemäßen Verfahren zur Herstellung von Blends aus Olefinpolymeren und syndiotaktischen Vinylpolymeren sind insbesondere (C₅H₅)Ti(OCH₃)₃, (C₅H₅)Ti(OC₂H₅)₃, (C₅H₅)Ti(OC₆H₅)₃, (C₅H₅)Ti(OCH₅)₃ und/oder (C₅H₅)Zr(OC₆H₅)₃.

Bevorzugte Pentamethylcyclopentadienylverbindungen von Übergangsmetallen der Gruppe IV A und V A für den Einsatz als Übergangsmetallverbindungen D des komplexkoordinativen Katalysators bei dem erfindinngsgemäßen Verfahren zur Herstellung von Blends aus Olefinpolymeren und syndiotaktischen Vinylpolymeren sind (C₁₀H₁₅)Ti(OCH₃)₃, (C₁₀H₁₅)Ti(OC₂H₅)₃, (C₁₀H₁₅)Ti(OC₆H₅)₃, (C₁₀H₁₅)Ti(OC₄H₉)₂Cl und/oder (C₁₀H₁₅)Ti(OCH₃)₂Cl .

Als Indenylverbindungen von Übergangsmetallen der Gruppe IV A und V A für den Einsatz als Übergangsmetallverbindungen D des komplexkoordinativen Katalysators bei dem erfindungsgemäßen Verfahren zur Herstellung von Blends aus Olefinpolymeren und syndiotaktischen Vinylpolymeren sind insbesondere (C₉H₈)Ti[N(CH₃)₂]₃ und/oder (C₉H₈)Ti(OCH₃)₃ geeignet.

Als zusätzlich N, P oder B enthaltende metallorganische Verbindungen von Übergangsmetallen der Gruppe IV A und V A eignen sich für den Einsatz als Übergangsmetallverbindungen D des komplexkoordinativen Katalysators bei dem erfindungsgemäßen Verfahren zur Herstellung von Blends aus Olefinpolymeren und syndiotaktischen Vinylpolymeren insbesondere TiCl₃[NC₂H₅)₂], (C₅H₅)Ti[N(CH₃)₂]₃, [(C₆H₅)₂P(O)]₃CHTiCl₃, [(C₆H₅)₂P(O)]₃CHTi(CH₃)₃, [H(C₃H₅N₂)₃B(C₅H₅)Ti(CH₃)₂, [H(C₃H₅N₂)₃B(C₅H₅) Ti(OCH₃)₂ und/oder Zr[N(CH₃)₂]₄.

Als Metallalkylverbindungen E des Katalysators bei dem erfindungsgemäßen Verfahren zur Herstellung von Blends aus Olefinpolymeren und syndiotaktischen Vinylpolymeren sind bevorzugt Metallalkylverbindungen wie Diethylzink, Diethylmagnesium, Dimethylzink oder Ethylbutylmagnesium geeignet.

Das molare Verhältnis Al/Ti in den eingesetzten Katalysatorsystemen liegt bevorzugt bei 100 bis 1000.

Geeignete Olefine, die bei dem erfindinngsgemäßen Verfahren zur Herstellung von Blends aus Olefinpolymeren und syndiotaktischen Vinylpolymeren eingesetzt werden, sind bevorzugt C₂-C₂₀-α-Olefine, insbesondere Ethylen, Propylen, Buten-1, Hexen-1, Octen-1, Decen-1, Hepten-1, Penten-1 und/oder Nonen-1 und/oder C₅-C₂₀ verzweigte Olefine, insbesondere 4-Phenylbuten-1, 6-Phenylhexen-1, 3-Methylbuten-1, 4-Methylpenten-1, 3-Methylpenten-1, 3-Methylhexen-1, 4-Methyl-hexen-1, 5, Methylhexen-1, 3,3-Dimethylpenten-1, Methylethylpenten-1, Ethylpenten-1, Ethylhexen-1, Dimethylbuten-1, 3,4-Diethylbuten-1, Ethylocten-1, Dimethylpenten-1, 4,4-Dimethylpenten-1, Cyclopenten, Methylcyclohexen, Vinylcyclohexan, Vinylcyclohexen, Norbornen, 5-Methylnorbornen, 5-Isobutylnorbornen, 5-Ethylnorbornen, 5,6-Dimethylnorbornen und 1-Methylnorbomen. Mit Vorteil können ebenfalls Mischungen dieser Olefine eingesetzt werden.

Besonders bevorzugt werden Ethylen, Propylen, Buten-1, 4-Methyl-penten-1, Cyclopenten und/oder Norbornen oder Mischungen dieser Olefine.

Bevorzugte Vinylaromaten, die bei dem erfindungsgemäßen Verfahren zur Herstellung von Blends aus Olefinpolymeren und syndiotaktischen Vinylpolymeren eingesetzt werden, sind α-Ethylstyren, α-Methylstyren, Bromstyren, Butenyl-α-methylstyren, Butenylstyren, Chlorethylstyren, Chlorstyren, Dimethylstyren, Dimethyl-tert.butylsilylstyren, Divinylbenzen, Divinyltoluen, Ethylbutenylstyren, Fluorstyren, Iopropenylstyren, Methylbutenylstyren, Methylfluorstyren, Methylstyren, Pentenylstyren, Propenylstyren, Syren, tert.Butylstyren, Triethylsilylstyren, Trimethylsilylstyren, Triphenylsilylstyren, Vinylbiphenyl, Vinylbrombiphenyl, Vinylbutenylbiphenyl, Vinylchlorbiphenyl, Vinylfluorbiphenyl, Vinylmethylbiphenyl, Vinylphenylanthracen, Vinylphenylnaphthalin, Vinylphenylphenanthren, Vinylphenylpyren, Vinylphenylterphenyl, Vinylterphenyl und/oder Vinyltrimethylsilylbiphenyl. Mit besonderem Vorzug werden ebenfalls Mischungen dieser vinylaromatischen Monomeren eingesetzt.

Geeignete Methacrylsäureester, die bei dem erfindinngsgemäßen Verfahren zur Herstellung von Blends aus Olefinpolymeren und syndiotaktischen Vinylpolymeren eingesetzt werden, sind bevorzugt Methylmethacrylat, tert.Butylmethacrylat, Glycidylmethacrylat, Allylmethacrylat, Methallylmethacrylat, C₂-C₈-Alkyl-methacrylate wie Ethylmethacrylat oder Ethylhexylmethacrylat, C₂-C₈-Hydroxyalkylmethacrylate wie 2-Hydroxyethylmethacrylat oder Hydroryoctylmethacrylat, C₃-C₈-Cycloalkyl-methacrylate wie Cyclohexylmethacrylat oder Ethylcyclohexylmethacrylat und/oder C₆-C₁₂-Arylmethacrylate wie Benzylmethacrylat oder tert.Butylphenylmethacrylat.

Als inerte Verdünnungsmittel werden bei dem erfindungsgemäßen Verfahren zur Herstellung von Blends aus Olefinpolymeren und syndiotaktischen Vinylpolymeren insbesondere aliphatische, cycloaliphatische und/oder aromatische Verbindungen eingesetzt, die keine funktionellen Gruppen enthalten.

Die Inertbedingungen werden durch Begasung mit inerten Gasen wie Stickstoff oder Argon realisiert.

Eine bevorzugte Variante bei der thermoplastischen Homogenisierung der erfindungsgemäßen Blends aus Olefinpolymeren und syndiotaktischen Vinylpolymeren in Ertrudern oder Thermoplastknetern besteht darin, daß die Homogenisierung oberhalb der Schmelztemperatur der Olefinpolymeren und unterhalb der Schmelztemperatur der syndiotaktischen Vinylpolymeren erfolgt.

Die erfindungsgemäßen Blends aus Olefinpolymeren und syndiotaktischen Vinylpolymeren mit feindisperser Verteilung der Blendkomponenten, hoher Wärmeformbeständigkeit und verbesserter Bedruckbarkeit und Lackierbarkeit sind insbesondere zur Herstellung von Folien, Fasern, Platten, Beschichtungen, Rohren, Hohlkörpern, Spritzgußerzeugnissen und/oder Schaumstoffen geeignet.

Die Erfindung wird durch nachfolgende Beispiele erläutert :

### Beispiel 1

In einem 10 l - Rühraintoklaven wurden 2 l trockenes Toluen vorgelegt und anschließend 120 cm³ einer Methylaluminoxanlösung (10 Gew.% Methylaluminoxan in Tolinen) hinzingegeben. Es wurde bei 50°C ca. 30 min gerührt, um eventuell noch vorhandene Verunreinigungen zu entfernen. Die Lösung wurde abgelassen, und der Reaktor im Vakuum getrocknet.
Im 10 l - Rührautoklav wurden zu 3 l Toluen 790 cm³ Methylaluminoxan - Lösung in Toluen zugegeben und 15 min bei 50°C gerührt. Anschließend wurden die Katalysatoren eingebracht: 204 mg EnInd₂HfCl₂ in 64cm³ toluenischer Methylaluminoxan - Lösung und 175mg CpTiCl₃ in 32cm³ Tolinen. Nach der Zugabe von 128cm³ Styren wurden 3,5 bar Propen aufgedrückt. Unter Rühren wurde 6h bei 50°C polymerisiert, wobei der Propendruck durch Nachdosieren konstant gehalten wurde. Der Abbruch der Reaktion erfolgte durch Einleiten der Reaktionslösung in salzsaures Methanol.
Nach Aufarbeitung wurden 420g eines weißen, pulverförmigen Materials erhalten. Das Blend aus Polypropylen und Polystyren wurde in einem Haake-Laborertruder bei einer Massetemperatur von 210°C plastifiziert, als Strang abgezogen und granuliert.
DSC-Messungen des Blends ergaben zwei getrennte Schmelztemperaturen von 131°C (Polypropylen) und 258°C (Polystyren).

### Beispiel 2

Der 10 l - Rührautoklav wurde gemäß Beispiel 1 für die Polymerisation vorbereitet. Im 10 l - Rührautoklav wurden zu 3 l Toluen 790 cm³ Methylaluminoxan - Lösung in Toluen zugegeben und 15 min bei 50°C gerührt. Anschließend wurden die Katalysatoren eingebracht: 64mg EnInd₂HfCl₂ in 10 cm³ toluenischer Methylaluminoxan - Lösung und 175mg CpTiCl₃ in 32cm³ Toluen. Nach der Zugabe von 128 cm³ Styren wurden diesmal 4 bar Ethen aufgedrückt. Unter Rühren wurde 3h bei 50°C polymerisiert, wobei der Ethendruck durch Nachdosieren konstant gehalten wurde. Nach Abbruch der Reaktion durch salzsaures Methanol und Aufarbeiten des Produktes wurden 386 g eines weißen, pulverförmigen Materials erhalten. Das Blend aus Polyethylen und Polystyren wurde in einem Haake-Laborertruder bei einer Massetemperatur von 195°C plastifiziert, als Strang abgezogen und granuliert. Die Schmelztemperatur des Polyethylens lag bei 119°C, wohingegen für das Polystyren nur eine Rekristallisation bei 219,5°C gefunden wurde.

### Beispiel 3

Der 10 l - Rührautoklav wurde gemäß Beispiel 1 für die Polymerisation vorbereitet. Im 10 l - Rührautoklav wurden zu 3,14 l Toluen 760 cm³ Methylaluminoxan - Lösung in Toluen zugegeben und 15 min bei 50°C gerührt. Anschließend wurden die Katalysatoren eingebracht: 56 mg (Me₂Si)Ind₂ZrCl₂ in 20 cm³ toluenischer Methylaluminoxan -Lösung, 175 mg CpTiCl₃ in 32 cm³ Toluen und 60 mg Aluminiumtriisobutyl in 40cm³ Toluen. Nach dem Einbringen von 218 g Norbornen in 44 cm³ Toluen und 128 cm³ Styren wurden 3,5 bar Propen aufgedrückt. Unter Rühren wurde 6h bei 50°C polymerisiert, wobei der Propendruck durch Nachdosieren konstant gehalten wurde.
Nach Abbruch der Reaktion durch salzsaures Methanol und Aufarbeiten des Produktes wurden 50 g eines Gemisches aus einem weißen, pulverförmigen Materials und einem farblosen, amorphen Material erhalten.
Das Blend aus Propen-Norbornen-Copolymer und Polystyren wurde in einer elektrisch beheizten 100cm³-Knetkammer bei einer Massetemperatur von 230°C 15 min plastifiziert, ausgetragen und vermahlen.

### Beispiel 4

Der 10 l - Rührautoklav wurde gemäß Beispiel 1 für die Polymerisation vorbereitet. Im 10 l - Rührautoklav wurden zu 3 l Toluen 790 cm³ Methylaluminoxan - Lösung in Toluen zugegeben und 15 min bei 50°C gerührt. Anschließend wurden die Katalysatoren eingebracht: 36 mg Cp₂ZrCl₂ in in 10 cm³ toluenischer Methylaluminoxan - Lösung, 202 mg EnInd₂HfCl₂ in toluenischer Methylaluminoxan - Lösung und 175,4 mg CpTiCl₃ in 32 cm³ Toluen. Nach Einbringen von 128 cm³ Styren wurden 3,5 bar Propen aufgedrückt. Unter Rühren wurde 3 h bei 50°C polymerisiert, wobei der Propendruck durch Nachdosieren konstant gehalten wurde. Nach Abbruch der Reaktion durch salzsaures Methanol und Aufarbeiten des Produktes wurden 360 g eines Gemisches aus einem weißen, pulverförmigen Material und einem farblosen, amorphen Material erhalten.
Das Blend aus Polypropylen und Polystyren wurde in einem Haake-Laborextruder bei einer Massetemperatur von 205°C plastifiziert, als Strang abgezogen und granuliert.

### Beispiel 5

Der 10 l - Rührautoklav wurde gemäß Beispiel 1 für die Polymerisation vorbereitet. Im 10 l - Rührautoklav wurden zu 3 l Toluen 790 cm³ Methylaluminoxan - Lösung in Toluen zugegeben und 15 min bei 50°C gerührt. Anschließend wurden die Katalysatoren eingebracht: 64 mg EnInd₂HfCl₂ in 10cm³ toluenischer Methylaluminoxan - Lösung und 175,4mg (Me₅Cp)TiCl₃ in 32 cm³ Toluen hinzugefügt wurden. Nach der Zugabe von 148cm³ p-Methylstyren wurden 3,5 bar Propen aufgedrückt. Unter Rühren wurde 6h bei 50°C polymerisiert, wobei der Propendruck durch Nachdosieren konstant gehalten wurde. Der Abbruch der Reaktion erfolgte durch Einleiten der Reaktionslösung in salzsaures Methanol.
Nach der Aufarbeitung wurden 176 g eines weißen, pulverförmigen Materials erhalten.
Das Blend aus Polypropylen und Poly-p-methylstyren wurde in einem Haake-Laborextruder bei einer Massetemperatur von 210°C plastifiziert, als Strang abgezogen und granuliert.

### Beispiel 6

Ein 20 l- Rührreaktor wurde gemäß Beispiel 1 für die Polymerisation vorbereitet.
In den 20 l- Rührreaktor wurden zu 6 l Toluen 2,4 l Methylaluminoxan - Lösung in Toluen zugegeben und 15 min bei 50°C gerührt. Nach der Zugabe von 3,0 l 1-Octen und 360 cm³ Styren wurde 15 min gerührt. Anschließend wurden die Katalysatoren eingebracht: 600 mg EnInd₂HfCl₂ in 96 cm³ toluenischer Methylaluminoxan - Lösung und 528mg CpTiCl₃ in 96 cm³ Toluen. Die Polymerisationstemperatur betrug 50°C, die Polymerisationszeit 6h. Es wurden 300g eines Gemisches aus amorphem Poly(1-octen) und weißem, pulverförmigen Polystyren mit einer Schmelztemperatur von 251°C erhalten.
Das Blend aus Poly(1-octen) und Polystyren wurde in einem Haake-Laborextruder bei einer Massetemperatur von 180°C plastifiziert, als Strang abgezogen und granuliert.

### Beispiel 7

Der Reaktor wurde wie in Beispiel 1 vorbereitet. Zu 100 cm³ Toluen wurden 5,2 cm³ Methylaluminoxan-Lösung in Toluen und 6,35 mg EnInd₂HfCl₂ in 1 cm³ toluenischer Methylaluminoxan-Lösung zugegeben. Unter Rühren wurde bei einem konstanten Propendruck von 2 bar 1 h bei 30 °C polymerisiert. Nach Ablassen des Propendruckes wurden 1,8 cm³ Methylaluminoxan-Lösung und 5,8 mg Cp₂ZrCl₂ in 2 cm³ toluenischer Methylaluminoxan-Lösung sowie 8 cm³ Methylmethacrylat, das in 17,2 cm³ einer 1,1 M ZnEt₂-Lösung in Toluen voraktiviert wurde, zugegeben.
Der Abbruch der Polymerisation erfolgte durch Einleiten der Reaktionslösung in salzsaures Methanol. Nach der Aufarbeitung wurden 8,5 g eines weißen, pulverförmigen Materials erhalten.

### Beispiel 8

Es wurde wie in Beispiel 7 verfahren, wobei jedoch der Ethendruck durch Nachdosieren auf 4 bar konstant gehalten wurde. Nach Ablassen des Ethendruckes wurde der Reaktor auf 0 °C abgekühlt und 3,9 cm³ einer 0,24 M Lösung eines aromatisch substituierten Ehteralkoholats sowie 0,034 cm³ 1,1-Diphenylethylen zugegeben. Nach Zudosierung von 1,2 cm³ einer 0,087 M sec-Butyllithium-Lösung in Cyclohexan/Toluen wurden 2 cm³ Butylmethacrylat zugegeben. Die Reaktion wurde nach 1 h durch Ausfällen in salzsaurem Methanol abgebrochen. Es wurden 9,4 g eines Gemisches aus pulverförmigem Polyethylen, mit einem Schmelzpunkt von 120 °C, und armorphem Polybutylmethacrylat, das einen Syndio-Anteil von ca. 67 % aufweist, erhalten.

## Patentansprüche

1. Blends aus Olefinpolymeren und syndiotaktischen Vinylpolymeren mit feindisperser Verteilung der Blendkomponenten, hoher Wärmeformbeständigkeit und verbesserter Bedruckbarkeit und Lackierbarkeit,
dadurch gekennzeichnet, daß die Blends aus 1 bis 99 Masse% Poly-C₂-C₂₀-Olefinen bzw. C₂-C₂₀-Olefin-Copolymeren, 99 bis 1 Masse% syndiotaktischen Poly-C₈-C₁₄-vinylaromaten und/oder syndiotaktischen Poly-C₄-C₁₅-methacrylsäureestern bzw. C₄-C₁₅-Methacrylsäureester-Copolymeren als syndiotaktische Vinylpolymere und gegebenenfalls 0,01 bis 40 Masse%, bezogen auf die Summe der Polymeren, an Zusatzstoffen bestehen,
wobei die Herstellung der Blends durch
a) katalytische Polymerisation von C₂-C₂₀-Olefinen, gegebenenfalls im Gemisch mit 99 bis 1 Masse% C₈-C₁₄-Vinylaromaten, bei -30°C bis + 100°C unter Inertbedingungen im Druckbereich von 0,5 bar bis 10 bar in Gegenwart von 10 bis 2000 Masse%, bezogen auf die Summe der eingesetzten C₂-C₂₀-Olefine und C₈-C₁₄-Vinylaromaten, an inerten Verdünnungsmitteln und von 0,1 Masse% bis 10 Masse%, bezogen auf die Summe der eingesetzten C₂-C₂₀-Olefine, eines Katalysatorgemischs, das aus 10⁻⁴ Masse% bis 10⁻² Masse% verbrückten Metallocenkomplexen A, 0,1 bis 10 Masse% Metalloxanverbindungen B, 0,001 Masse% bis 1,0 Masse% Metallalkylverbindungen C und, bei Anwesenheit von C₈-C₁₄-Vinylaromaten in der Reaktionsmischung, 10⁻⁴ Masse% bis 10⁻² Masse% Übergangsmetallverbindungen D, jeweils bezogen auf die Summe der eingesetzten C₂-C₂₀-Olefine und C₈-C₁₄-Vinylaromaten, besteht,
wobei die verbrückten Metallocenkomplexe A Metallocenkomplexe der Formel 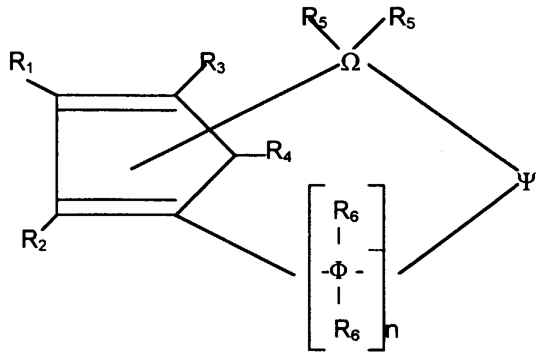 sowie Mischungen dieser verbrückten Metallocenkomplexe darstellen,
dabei bedeuten :
R₁, R₂, R₃, R₄ : H; (Si-substituiertes) Alkyl, (Si-substituiertes) Aryl,
R₅, R₆ : H, Halogen, Alkyl, Aryl; Ω : Ti, Zr, Hf, V, Nb und/oderTa,
Φ: C und/oder Si, n steht für ganzzahlige Werte von 1 bis 6,
Ge und/oder Sn n=1
Ψ - O -, - S - , Alkyl- bzw. Aryl-substituiertes N, P oder Si oder (substituiertes) Cyclopentadienyl,
die Metalloxanverbindungen B oligomere und/oder polymere cyclische und/oder lineare Metalloxanverbindungen von Metallen der Hauptgruppen III und/oder IV mit der allgemeinen Formel (1) oder (2) 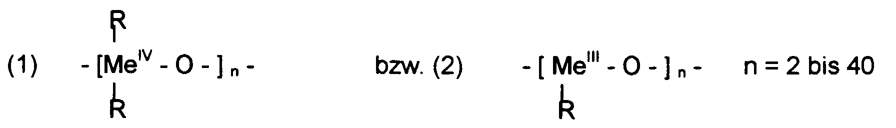 sowie monomere oder oligomere lineare Metalloxanverbindungen der allgemeinen Formel (3) oder (4) 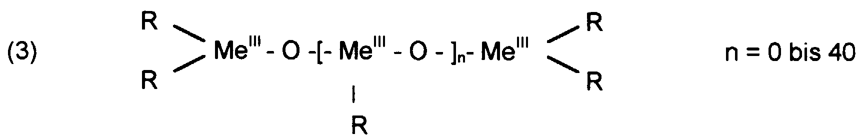 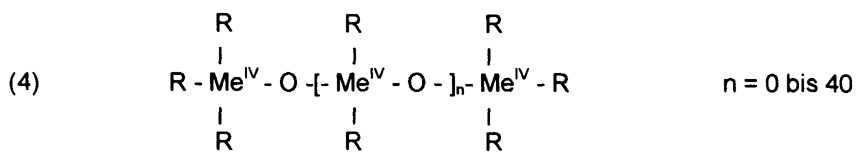 wobei jeweils Me^{IV} = Ge, Sn, Pb; Me^{III} = B, Al, Ca, In; R = C₁-C₁₈ - Alkyl,
sowie Mischungen dieser Metalloxane, darstellen,
die Metallalkylverbindungen C Metallalkyle von Bor und/oder Aluminium oder Mischungen dieser Metallalkylverbindungen darstellen;
und die bei Anwesenheit von C₈-C₁₄-Vinylaromaten in der Reaktionsmischinng im Katalysatorgemisch enthaltenen Übergangsmetallverbindungen D Halogenide, Alkoxide, Alkoxyhalogenide, Acetylacetonate, Cyclopentadienylverbindungen, Indenylverbindungen und/oder zusätzlich N, P oder B enthaltende metallorganische Verbindungen von Übergangsmetallen der Gruppe IV A und V A des Periodensystems sowie Mischungen dieser Übergangsmetallverbindungen darstellen,
b) gegebenenfalls nachfolgend Zusatz von 1 bis 900%, bezogen auf die in a) eingesetzten C₂-C₂₀-Olefne und C₈-C₁₄-Vinylaromaten, an C₄-C₁₅-Methacrylsäureestern, 0,001 Masse% bis 1,0 Masse%, bezogen auf die Summe der eingesetzten C₂-C₂₀-Olefine und C₄-C₁₅-Methacrylsäureester, an Metallalkylverbindungen E und gegebenenfalls 10⁻⁴ Masse% bis 5 x 10⁻³ Masse% an verbrückten Metallkomplexen A, 0,1 Masse% bis 6 Masse% an Metalloxanverbindungen B und 0,001 Masse% bis 0,05 Masse% an Metallalkylverbindungen C, jeweils bezogen auf die Summe der ein-gesetzten C₂-C₂₀-Olefine, C₈-C₁₄-Vinylaromaten und C₄-C₁₅-Methacrylsäureester,
wobei die Metallalkylverbindungen E Metallalkyle des Magnesiums oder Zinks oder Mischungen dieser Metallalkyle darstellen und die Verbindungen A, B und C mit den unter a) benannten Verbindungen identisch sind,
c) nachfolgend gegebenenfalls Druckerhöhung bis 50 bar,
d) nachfolgend katalytische Polymerisation der in den Reaktionsmischungen a) und b) enthaltenen C₈-C₁₄-Vinylaromaten, C₄-C₁₅-Methacrylsäureester und nichtumgesetzten C₂-C₂₀-Olefine in Gegenwart der in den Reaktionsmischungen a) und b) enthaltenen Katalysatoren bei -30°C bis + 100°C,
e) nachfolgend Desaktivierung der Katalysatoren durch Säuren und Abtrennung der Poly-C₂-C₂₀-Olefine bzw. C₂-C₂₀-Olefin-Copolymeren und syndiotaktischen Vinylpolymeren in an sich bekannter Weise,
f) und nachfolgend eine Plastifizierung des Gemischs aus Poly-C₂-C₂₀-Olefinen bzw. C₂-C₂₀-Olefin-Copolymeren und syndiotaktischen Vinylpolymeren an sich bekannter Weise in Extrudern oder Thermoplastknetern bei Temperaturen oberhalb der Schmelstemperatur der Poly-C₂-C₂₀-Olefine bzw. C₂-C₂₀-Olefin-Copolymeren
erfolgt ist,
wobei bei Abwesenheit von C₈-C₁₄-Vinylaromaten in der Reaktionsmischung a) die Reaktionsstufe b) zwingend ist und bei Anwesenheit von C₈-C₁₄-Vinylaromaten in der Reaktionsmischung a) die Reaktionsstufe b) entfallen kann,
und wobei vor und/oder im Verfahrensschritt f) als Zusatzstoffe 0,01 bis 2,5 Masse% Stabilisatoren, 0,1 bis 1 Masse% Antistatika, 0,2 bis 3 Masse% Pigmente, 0,05 bis 1 Masse% Nukleierungsmittel , 5 bis 40 Masse% Füll- und/oder Verstärkerstoffe , 2 bis 20 Masse% Flammschutzmittel, 1 bis 30 Masse% Elastomere als Schlagzähmodifikatoren und/oder 0,01 bis 1 Masse% Verarbeitungshilfsmittel, jeweils bezogen auf die Summe der Poly-C₂-C₂₀-Olefine bzw. C₂-C₂₀-Olefin-Copolymeren und syndiotaktischen Vinylpolymeren, zugesetzt werden können.

2. Blends aus Olefinpolymeren und syndiotaktischen Vinylpolymeren nach Anspruch 1, dadurch gekennzeichnet, daß die Poly-C₂-C₂₀-Olefine bzw. C₂-C₂₀-Olefin-Copolymere Olefinpolymere mit hohem Ordnungszustand und/oder amorphe Olefinpolymere sind, die durch komplexkoordinative Polymerisation von Olefinen, bevorzugt von α-Olefinen und/oder cyclischen Olefinen, insbesondere von Ethylen, Propylen, Buten-1, 4-Methylpenten-1, Cyclopenten und/oder Norbornen, oder Mischungen dieser Olefine herstellbar sind.

3. Blends aus Olefinpolymeren und syndiotaktischen Vinylpolymeren nach Anspruch 1 oder 2, dadurch gekennzeichnet, daß die syndiotaktischen Vinylpolymere syndiotaktische Poly-C₈-C₁₄-vinylaromaten sind, die durch komplexkoordinative Polymerisation von C₈-C₁₄-Vinylaromaten oder Gemischen von C₈-C₁₄-Vinylaromaten, bevorzugt von Styren, Styrenderivaten, α-Methylstyren, Derivaten des α-Methylstyrens, Vinylbiphenyl und/oder Derivaten des Vinylbiphenyls, herstellbar sind.

4. Blends aus Olefinpolymeren und syndiotaktischen Vinylpolymeren nach einem oder mehreren der Ansprüche 1 bis 3, dadurch gekennzeichnet, daß die syndiotaktischen Vinylpolymere syndiotaktische Poly-C₄-C₁₅-methacrylsäureester und/oder syndiotaktische C₄-C₁₅-methacrylsäureester-Copolymere sind, die durch katalytische Polymerisation von C₄-C₁₅-Methacrylsäureestern oder Gemischen von C₄-C₁₅-Methacrylsäureestern, bevorzugt von Methylmethacrylat, C₂-C₈-Alkyl-methacrylaten, tert.Butylmethacrylat, C₂-C₈-Hydroxyalkyl-methacrylaten, C₃-C₈-Cycloalkylmethacrylaten, Glycidylmethacrylat, Allylmethacrylat, Methallylmethacrylat und/oder C₆-C₁₂-Aryl - methacrylaten herstellbar sind.

5. Blends aus Olefinpolymeren und syndiotaktischen Vinylpolymeren nach einem oder mehreren der Ansprüche 1 bis 4, dadurch gekennzeichnet, daß die Blends die syndiotaktischen Vinylpolymeren in Form von feindispersen, nicht aufgeschmolzenen Partikeln, mit mittleren Partikeldurchmessern von bevorzugt 5 bis 250 µm, enthält.

6. Verfahren zur Herstellung von Blends aus Olefinpolymeren und syndiotaktischen Vinylpolymeren mit feindisperser Verteilung der Blendkomponenten, hoher Wärmeformbeständigkeit und verbesserter Bedruckbarkeit und Lackierbarkeit,
dadurch gekennzeichnet, daß die Herstellung der Blends durch
a) katalytische Polymerisation von C₂-C₂₀-Olefinen, gegebenenfalls im Gemisch mit 99 bis 1 Masse% C₈-C₁₄-Vinylaromaten, bei -30°C bis + 100°C unter Inertbedingungen im Druckbereich von 0,5 bar bis 10 bar in Gegenwart von 10 bis 2000 Masse%, bezogen auf die Summe der eingesetzten C₂-C₂₀-Olefine und C₈-C₁₄-Vinylaromaten, an inerten Verdünnungsmitteln und von 0,1 Masse% bis 10 Masse%, bezogen auf die Summe der eingesetzten C₂-C₂₀-Olefine, eines Katalysatorgemischs, das aus 10⁻⁴ Masse% bis 10⁻² Masse% verbrückten Metallocenkomplexen A, 0,1 bis 10 Masse% Metalloxanverbindungen B, 0,001 Masse% bis 1,0 Masse% Metallalkylverbindungen C und bei Anwesenheit von C₈-C₁₄-Vinylaromaten in der Reaktionsmischung 10⁻⁴ Masse% bis 10⁻² Masse% Übergangsmetallverbindungen D, jeweils bezogen auf die Summe der eingesetzten C₂-C₂₀-Olefine und C₈-C₁₄-Vinylaromaten, besteht,
wobei die verbrückten Metallocenkomplexe A Metallocenkomplexe der Formel 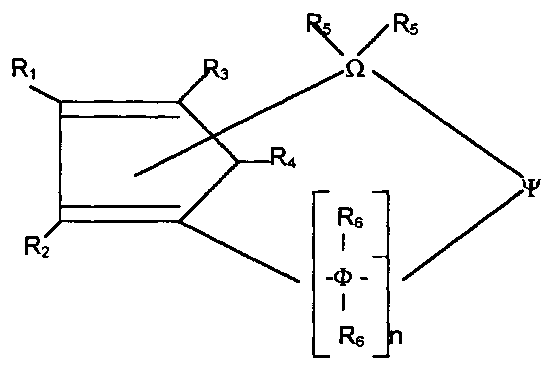 sowie Mischungen dieser verbrückten Metallocenkomplexe darstellen,
dabei bedeuten :
R₁, R₂, R₃, R₄ : H; (Si-substituiertes) Alkyl, (Si-substituiertes) Aryl,
R₅, R₆ : H, Halogen, Alkyl, Aryl; Ω : Ti, Zr, Hf, V, Nb und/oderTa,
Φ : C und/oder Si, n steht für ganzzahlige Werte von 1 bis 6,
Ge und/oder Sn n=1
Ψ : - O -, - S - , Alkyl- bzw. Aryl-substituiertes N, P oder Si oder (substituiertes) Cyclopentadienyl,
die Metalloxanverbindungen B oligomere und/oder polymere cyclische und/oder lineare Metalloxanverbindungen von Metallen der Hauptgruppen III und/oder IV mit der allgemeinen Formel (1) oder (2) 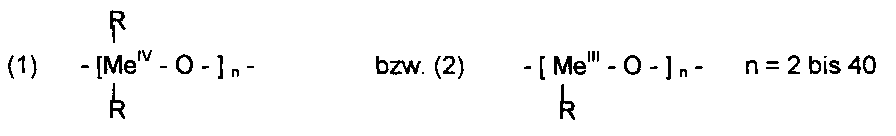 sowie monomere oder oligomere lineare Metalloxanverbindungen der allgemeinen Formel (3) oder (4) 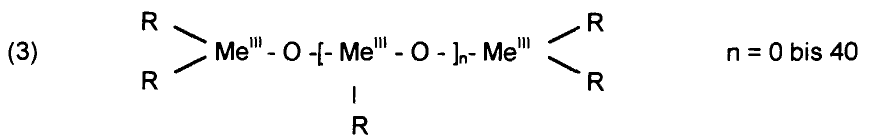 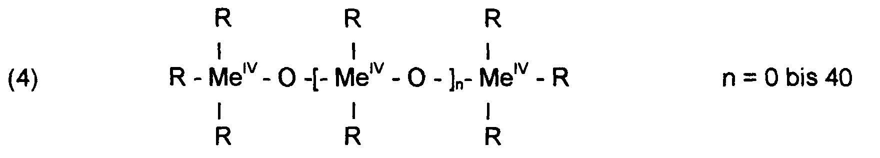 wobei jeweils Me^{IV} = Ge, Sn, Pb; Me^{III} = B, Al, Ga, In; R = C₁-C₁₈ - Alkyl,
sowie Mischungen dieser Metalloxane, darstellen,
die Metallalkylverbindungen C Metallalkyle von Bor und/oder Aluminium oder Mischungen dieser Metallalkylverbindungen darstellen;
und die bei Anwesenheit von C₈-C₁₄-Vinylaromaten in der Reaktionsmischung im Katalysatorgemisch enthaltenen Übergangsmetallverbindungen D Halogenide, Alkoxide, Alkoxyhalogenide, Acetylacetonate, Cyclopentadienylverbindungen, Indenylverbindungen und/oder zusätzlich N, P oder B enthaltende metallorganische Verbindungen von Übergangsmetallen der Gruppe IV A und V A des Periodensystems sowie Mischungen dieser Übergangsmetallverbindungen darstellen,
b) gegebenenfalls nachfolgend Zusatz von 1 bis 900%, bezogen auf die in a) eingesetzten C₂-C₂₀-Olefine und C₈-C₁₄-Vinylaromaten, an C₄-C₁₅-Methacrylsäureestern, 0,001 Masse% bis 1,0 Masse%, bezogen auf die Summe der eingesetzten C₂-C₂₀-Olefine und C₄-C₁₅-Methacrylsäureester, an Metallalkylverbindungen E und gegebenenfalls 10⁻⁴ Masse% bis 5 x 10⁻³ Masse% an verbrückten Metallkomplexen A, 0,1 Masse% bis 6 Masse% an Metalloxanverbindungen B und 0,001 Masse% bis 0,05 Masse% an Metallalkylverbindungen C, jeweils bezogen auf die Summe der eingesetzten C₂-C₂₀-Olefine, C₈-C₁₄-Vinylaromaten und C₄-C₁₅-Methacrylsäureester,
wobei die Metallalkylverbindungen E Metallalkyle des Magnesiums oder Zinks oder Mischungen dieser Metallalkyle darstellen und die Verbindungen A, B und C mit den unter a) benannten Verbindungen identisch sind,
c) nachfolgend gegebenenfalls Druckerhöhung bis 50 bar,
d) nachfolgend katalytische Polymerisation der in den Reaktionsmischungen a) und b) enthaltenen C₈-C₁₄-Vinylaromaten, C₄-C₁₅-Methacrylsäureester und nichtumgesetzten C₂-C₂₀-Olefine in Gegenwart der in den Reaktionsmischungen a) und b) enthaltenen Katalysatoren bei -30°C bis + 100°C,
e) nachfolgend Desaktivierung der Katalysatoren durch Säuren und Abtrennung der Poly-C₂-C₂₀-Olefine bzw. C₂-C₂₀-Olefin-Copolymeren und syndiotaktischen Vinylpolymeren in an sich bekannter Weise,
f) und nachfolgend eine Plastifizierung des Gemischs aus Poly-C₂-C₂₀-Olefinen bzw. C₂-C₂₀-Olefin-Copolymeren und syndiotaktischen Vinylpolymeren an sich bekannter Weise in Extrudern oder Thermoplastknetern bei Temperaturen oberhalb der Schmelztemperatur der Poly-C₂-C₂₀-Olefinen bzw. C₂-C₂₀-Olefin-Copolymeren
erfolgt,
wobei bei Abwesenheit von C₈-C₁₄-Vinylaromaten in der Reaktionsmischung a) die Reaktionsstufe b) zwingend ist und bei Anwesenheit von C₈-C₁₄-Vinylaromaten in der Reaktionsmischung a) die Reaktionsstufe b) entfallen kann,
und wobei vor und/oder im Verfahrensschritt f) als Zusatzstoffe 0,01 bis 2,5 Masse% Stabilisatoren, 0,1 bis 1 Masse% Antistatika, 0,2 bis 3 Masse% Pigmente, 0,05 bis 1 Masse% Nukleierungsmittel , 5 bis 40 Masse% Füll- und/oder Verstärkerstoffe, 2 bis 20 Masse% Flammschutzmittel, 1 bis 30 Masse% Elastomere als Schlagzähmodifikatoren und/oder 0,01 bis 1 Masse% Verarbeitungshilfsmittel, jeweils bezogen auf die Summe der Poly-C₂-C₂₀-Olefine bzw. C₂-C₂₀-Olefin-Copolymeren und syndiotaktischen Vinylpolymeren, zugesetzt werden können.

7. Verfahren zur Herstellung von Blends aus Olefinpolymeren und syndiotaktischen Vinylpolymeren nach Anspruch 6, dadurch gekennzeichnet, daß als Olefine α-Olefine und/oder cyclische Olefine, bevorzugt Ethylen, Propylen, Buten-1, 4-Methylpenten-1, Cyclopenten und/oder Norbornen oder Mischungen dieser Olefine eingesetzt werden.

8. Verfahren zur Herstellung von Blends aus Olefinpolymeren und syndiotaktischen Vinylpolymeren nach Anspruch 6 oder 7, dadurch gekennzeichnet, daß als C₈-C₁₄-Vinylaromaten Styren, Styrenderivate, α-Methylstyren, Derivate des α-Methylstyrens, Vinylbiphenyl und/oder Derivate des Vinylbiphenyls oder Mischungen dieser C₈-C₁₄-Vinylaromaten eingesetzt werden.

9. Verfahren zur Herstellung von Blends aus Olefinpolymeren und syndiotaktischen Vinylpolymeren nach einem oder mehreren der Ansprüche 6 bis 8, dadurch gekennzeichnet, daß als C₄-C₁₅-Methacrylsäureester Methylmethacrylat, C₂-C₈-Alkyl-methacrylate, tert.Butylmethacrylat, C₂-C₈-Hydroxyalkyl-methacrylate, C₃-C₈-Cycloalkylmethacrylate, Glycidylmethacrylat, Allylmethacrylat, Methallylmethacrylat und/oder C₆-C₁₂-Aryl-methacrylate oder Mischungen dieser C₄-C₁₅-Methacrylsäureester eingesetzt werden.

10. Verwendung von Blends aus Olefinpolymeren und syndiotaktischen Vinylpolymeren nach einem oder mehreren der Ansprüche 1 bis 5 zur Herstellung von Folien, Fasern, Platten, Beschichtungen, Rohren, Hohlkörpern, Spritzgußerzeugnissen und Schaumstoffen.
